# EUROPÄISCHE PATENTANMELDUNG

(11) **EP 3 144 523 A1**
(43) Veröffentlichungstag der Anmeldung: **22.03.2017**
(21) Anmeldenummer: 15174044.6
(22) Anmeldetag: 26.06.2015

(54) **VORRICHTUNG ZUR SCHLUPFÜBERWACHUNG**

(71) Anmelder: Nordex Energy GmbH, 22419 Hamburg (DE)
(72) Erfinder: Kabatzke, Wolfgang, 21502 Geesthacht (DE); Kohlrusch, Matthias, 18258 Schwaan /OT Letschow (DE)
(74) Vertreter: Hauck Patentanwaltspartnerschaft mbB

(57) **Zusammenfassung**

Vorrichtung zur Überwachung eines an einem Triebstrang einer Windenergieanlage auftretenden Schlupfes zwischen einer von einem Rotor angetriebenen Rotorwelle und einer einen Generator antreibenden Generatorwelle, die über eine Kupplung sowie ein Getriebe mit der Rotorwelle verbunden ist, wobei eine erste Drehzahlerfassungseinheit auf der Rotorwelle und eine zweite Drehzahlerfassungseinheit auf der Generatorwelle jeweils einen eine Drehzahl der entsprechenden Welle anzeigenden Analogwert generiert, und eine Auswerteeinrichtung zur Schlupfüberwachung die Analogwerte auswertet.

## Beschreibung

Die vorliegende Erfindung betrifft eine Vorrichtung zur Überwachung eines an einem Triebstrang einer Windenergieanlage auftretenden Schlupfes.

Der Triebstrang einer Windenergieanlage wird im Wesentlichen aus einer Rotorwelle und einer Generatorwelle gebildet, die über ein Getriebe und eine Kupplung miteinander verbunden sind. Die Rotorwelle des Triebstranges wird von einem sich im Wind drehenden Rotor angetrieben. Die Generatorwelle treibt den Generator zur Erzeugung einer elektrischen Leistung an. Da der Rotor der Windenergieanlage eine sehr große Masse besitzt, und somit bei zunehmenden Rotorblattlängen und damit verbunden zunehmenden Blattoberflächen ein in zunehmendem Maß dynamischer reagierendes System wird, können bei starken bzw. sprunghaften Änderungen der Windgeschwindigkeit schlagartig Laständerungen und mechanische Verformungen am Triebstrang auftreten. Diese Laständerungen können auch bei Netzeinbrüchen auftreten. Die zwischen Rotorwelle und Generatorwelle vorgesehene Kupplung kann bei solchen Fällen durchrutschen, um Beschädigungen zu verhindern. Tritt das Durchrutschen der Kupplung übergebührlich häufig auf, so werden Ermüdungseffekte in der Kupplung erzeugt, die für die Sicherheit der Windenergieanlage kritisch sein können. Weiterhin können die benannten mechanischen Beanspruchungen zu Brüchen innerhalb des Getriebes führen. Mit einer Schlupfüberwachung am Triebstrang können daraus resultierende kritische Situationen, wie beispielsweise eine übermäßig stark steigende Drehzahl der Rotorwelle und eine übermäßig fallende Drehzahl der Generatorwelle rechtzeitig erkannt werden.

Allgemein ist es für die Drehzahlüberwachung mit erhöhter Sicherheit bei Motoren, Turbinen, Pumpen, Walzen, Getrieben, Fördereinrichtungen und dergleichen bekannt, zweikanalige Überwachungsgeräte mit erhöhter Funktionssicherheit (Stufe SIL2) einzusetzen. Solche Geräte besitzen beispielsweise eine Genauigkeit von +/-0,1 % vom Messwert +/- 1 in der letzten Stelle. Die Mindestzeit für die Messperiode beträgt beispielsweise 5 ms, wobei sich dann eine Reaktionszeit von mehr als 10 ms ergibt. Ein derartiges Gerät wird beispielsweise von der Firma Braun GmbH unter der Bezeichnung D521 angeboten. Dieses System bietet eine Drehzahlüberwachung mit erhöhter Sicherheit, aber keine Schlupfüberwachung.

Aus WO 2010/154318 A2 ist eine Windenergieanlage und ein Verfahren zum Prüfen eines Drehzahlrelais einer Windenergieanlage bekannt. Hierbei wird ein Drehzahlsensor in einer Windenergieanlage getestet, um das von dem Drehzahlsensor betätigte Drehzahlrelais kostengünstig überprüfen und testen zu können.

Aus DE 25 16 569 A1 ist eine elektronische Schlupfmesseinrichtung bekannt, bei der aus einem Impulsbreitenzuwachs Impulse abgeleitet werden, deren zeitlicher Mittelwert dem Schlupf direkt proportional ist. Diese Impulse werden aus einem Vergleich von Rechteckimpulsen zu einer Bezugsdrehzahl und der schlupfbehafteten Istdrehzahl erzeugt.

Der Erfindung liegt die Aufgabe zugrunde, mit einfachen Mitteln eine Vorrichtung zur Überwachung eines an einem Triebstrang einer Windenergieanlage auftretenden Schlupfes bereitzustellen, die eine kurze Reaktionszeit besitzt.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung ist vorgesehen und bestimmt zur Überwachung eines an einem Triebstrang einer Windenergieanlage auftretenden Schlupfes. Der Schlupf tritt zwischen einer von einem Rotor über den Wind angetriebenen Rotorwelle und einer einen Generator antreibenden Generatorwelle auf, die über ein Getriebe und eine Kupplung miteinander verbunden sind. An dem Triebstrang sind mindestens zwei Drehzahlerfassungseinheiten angeordnet. Eine erste Drehzahlerfassungseinheit ist beispielsweise auf der Rotorwelle angeordnet. Eine zweite Drehzahlerfassungseinheit ist beispielsweise auf der Generatorwelle angeordnet. Die räumliche Anordnung der Drehzahlerfassungseinheiten ist hierbei unerheblich, entscheidend ist, dass die Drehzahlerfassungseinheiten jeweils die Drehzahl der ihnen zugeordneten Welle erfassen und einen die Drehzahl der entsprechenden Welle anzeigenden normierten und identischen Analogwert generieren. Unter einem Analogwert wird ein Wert verstanden, der einen stufenlosen und bevorzugt auch unterbrechungsfreien Verlauf seiner Werte besitzt. Unter Berücksichtigung des Getriebeübersetzungsfaktors verhalten sich beide Analogwerte identisch und sind durch ihre Normierung miteinander vergleichbar. Erfindungsgemäß ist eine analoge Auswerteeinrichtung zur Schlupfüberwachung vorgesehen, an der die Analogwerte anliegen. Die Erfindung beruht auf der Erkenntnis, dass die grundsätzlich frequenzbasierten Messverfahren zur Schlupfüberwachung an ihre Grenzen stoßen.

In einer bevorzugten Ausgestaltung führt die Auswerteeinrichtung einen Schwellwertvergleich dahingehend aus, ob die Analogwerte um mehr als einen vorbestimmten Schwellwert voneinander abweichen. Ein Schwellwertvergleich ist eine mit analogen Werten sehr schnell und genau ausführbare Operation, die für eine Schlupfüberwachung kurze Reaktionszeiten sicherstellt.

In einer bevorzugten Ausgestaltung liegt an der Auswerteeinrichtung ein analoger Referenzwert für den Schwellwertvergleich an. Über den analogen Referenzwert kann vorgegeben werden, bis zu welchem Differenzwert die Drehzahlen voneinander abweichen dürfen. Dabei können die Toleranzen in den positiven, aber auch negativen Bereich laufen.

In einer bevorzugten Ausgestaltung besitzt die Auswerteeinrichtung mehrere Operationsverstärker, an denen die Analogwerte anliegen. Dies dient der Erhöhung der Verfügbarkeit der Hardware. Operationsverstärker können mit geringem Aufwand in ausreichender Genauigkeit zur Verfügung gestellt werden.

Bevorzugt weist die Auswerteeinrichtung mindestens einen Kanal auf, der ein erstes Paar von Operationsverstärkern besitzt. Die Operationsverstärker besitzen jeweils einen invertierenden und einen nicht invertierenden Eingang. Ein erster Analogwert liegt an einem ersten Operationsverstärker an dessen invertierendem Eingang sowie an einem zweiten Operationsverstärker an dessen nicht invertierendem Eingang an. Ein zweiter Analogwert liegt an dem zweiten Operationsverstärker an dessen invertierendem Eingang sowie an dem ersten Operationsverstärker an dessen nicht invertierendem Eingang an. Auf diese Weise wird durch das erste Paar von Operationsverstärkern ein positiver und ein negativer Differenzwert der erfassten normierten Analogwerte erzeugt.

In einer bevorzugten Ausgestaltung liegen die normierten Analogwerte als Stromwerte vor, wobei der Ausgangswert der Operationsverstärker bevorzugt ein Spannungswert ist.

In einer bevorzugten Ausgestaltung ist in dem mindestens einen Kanal mit dem ersten Paar von Operationsverstärkern ein weiteres zweites Paar von Operationsverstärkern vorgesehen, die jeweils einen invertierenden Eingang und einen nicht invertierenden Eingang besitzen. Bevorzugt handelt es sich hierbei um einen Spannungseingang.

In einer bevorzugten Weiterbildung liegt der analoge Referenzwert als Spannungswert an dem zweiten Paar von Operationsverstärkern jeweils an einem Eingang an, wobei einer der beiden Eingänge ein invertierender Eingang und der andere der beiden Eingänge ein nicht invertierender Eingang ist. Auf diese Weise kann die positive und die negative Referenzspannung mit der positiven und der negativen Differenz der Analogwerte verglichen werden. Mithilfe des zweiten Paares von Operationsverstärkern kann also festgestellt werden, ob die Differenz der Analogwerte nach oben oder nach unten von dem vorbestimmten Referenzwert abweicht.

In einer bevorzugten Ausgestaltung ist die Auswerteeinrichtung zweikanalig aufgebaut. Zweckmäßigerweise wird durch die Auswerteeinrichtung ein Abschaltbefehl für die Windenergieanlage erzeugt. Bevorzugt sind die Drehzahlerfassungseinheiten so ausgebildet, dass eine Abtasteinrichtung und ein Impulsgeber vorgesehen sind, wobei der Impulsgeber ein drehzahlabhängiges Frequenzsignal erzeugt. Das Drehzahlsignal wird über einen Umsetzer in ein analoges Signal, bevorzugt ein Stromsignal, umgesetzt.

Eine bevorzugte Ausgestaltung der Erfindung wird nachfolgend näher erläutert. Es zeigen:
- Fig. 1: einen Triebstrang einer Windenergieanlage mit einer schematisch dargestellten Drehzahl- und Schlupfüberwachung und
- Fig. 2: ein Schaltungsbeispiel für eine Schlupfüberwachung.

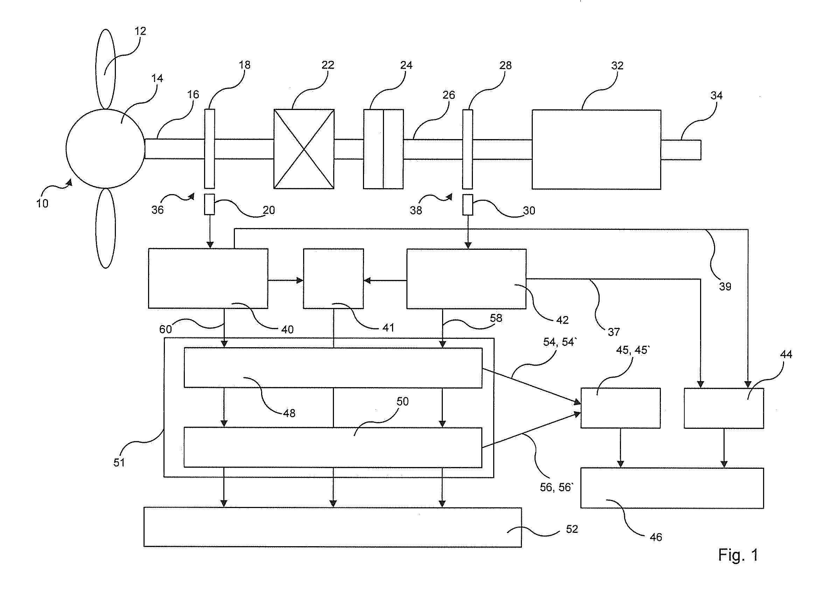

Fig. 1 zeigt einen Rotor 10 mit Rotorblättern 12 in einer vereinfachten schematischen Darstellung. Über eine Rotornabe 14 wird eine Rotorwelle 16 angetrieben. An der Rotorwelle 16 ist eine schematisch dargestellte Sensorscheibe 18 angeordnet, auf die eine Abtasteinheit 20 gerichtet ist. Die Rotorwelle 16 mündet in ein Getriebe 22, dessen Ausgangswelle über eine Kupplung 24 in die Generatorwelle 26 übergeht. Die Generatorwelle 26 besitzt ebenfalls eine Sensorscheibe 28, auf die ebenfalls eine Abtasteinheit 30 gerichtet ist. Die Generatorwelle 26 mündet in den Generator 32, der eine elektrische Leistung 34 zur Einspeisung in das Netz zur Verfügung stellt.

Die Sensorscheiben 18, 28 und die Abtasteinheiten 20, 30 bilden jeweils zusammen eine Drehzahlerfassungseinheit 36, 38, die jeweils in ein gepulstes, digitales Signal erzeugen, das über die Auswertegeräte 40, 42 in jeweils ein analoges Stromsignal umgesetzt wird. Die Auswertegeräte 40, 42 besitzen die gleiche Bauart, werden jedoch aufgrund der Getriebeübersetzung auf unterschiedliche Drehzahlen eingestellt und erzielen somit gleiche Analogstromwerte 58, 60 unter Berücksichtigung der Getriebeübersetzung. Je nach Höhe der Drehzahl werden Ströme im Bereich von 4 bis 20 mA erzeugt. Die Ströme der Auswertegeräte 40, 42 werden einem Schwellwertvergleich unterzogen und liegen nachfolgend als binäre Signale 37, 39 jeweils an einem Sicherheitsschaltgerät 44 an. Das Sicherheitsschaltgerät 44 prüft die anliegenden Binärsignale 37, 39 und löst, falls die Drehzahlen zu stark von einem vorgegebenen Referenzwert abweichen, eine Sicherheitskette 46 aus, die die Windenergieanlage zum Stillstand bringt. Die direkt an dem Sicherheitsschaltgerät 44 anliegenden binären Signale 37, 39 dienen zur Überwachung der Drehzahl.

Zwischen die Auswertegeräte 40, 42 ist eine Überwachungseinheit 41 geschaltet, die durch Vergleich der Signale der Auswertegeräte 40, 42 einen Drahtbruch oder einen Sensorausfall erkennt und an die Betriebssteuerung 52 meldet.

Analoge Stromwerte 58, 60 werden von den Auswertegeräten 40, 42 an zwei Differenzstromgrenzwertschalter 48, 50 weitergeleitet, die in einer Auswerteeinrichtung 51 zusammengefasst sind. Die Dopplung der Differenzstromgrenzwertschalter 48, 50 erfüllt die für die Steuerung der Windenergieanlage notwendigen Sicherheitskriterien. Die Ausgangssignale der Differenzstromgrenzwertschalter 48, 50 werden an die Betriebssteuerung 52 der Windenergieanlage weitergeleitet. Zugleich liegen die Ausgangssignale 54, 54', 56, 56' der Differenzstromgrenzwertschalter als binäre Signale an zwei Sicherheitsschaltgeräten 45, 45' an, wobei die Signale 54, 54', 56, 56' zwei Kanäle bilden. An jedem der zwei Sicherheitsschaltgeräte 45, 45' liegt ein Paar von binären Signalen aus den beiden Differenzstromgrenzwertschaltern 48, 50 an.

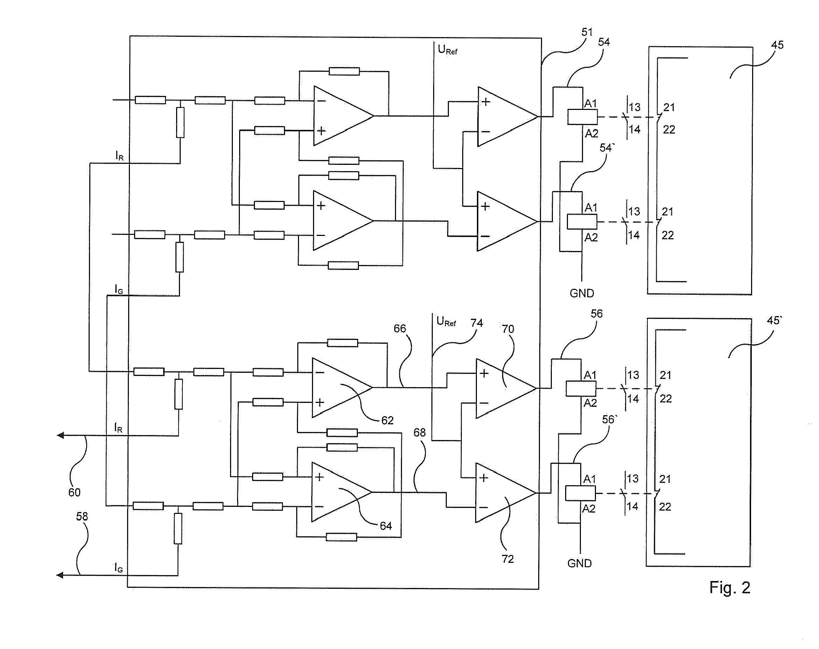

Fig. 2 zeigt einen Schaltplan für die Differenzstromgrenzwertschalter 48 und 50. An den Eingängen liegen die analogen Stromwerte zur Drehzahl der Generatorwelle bzw. der Rotorwelle 58, 60 an, wobei das Getriebeübersetzungsverhältnis hier berücksichtigt ist. Über ein erstes Paar von Operationsverstärkern 62, 64 wird an deren Ausgängen jeweils ein positives und ein negatives Differenzsignal erzeugt. Hierzu liegt an dem invertierenden Eingang des Operationsverstärkers 64 der analoge Stromwert zur Drehzahl der Generatorwelle 58 an, während an dem nicht invertierten Eingang des Operationsverstärkers 64 der analoge Stromwert zur Drehzahl der Rotorwelle 60 anliegt. An dem Operationsverstärker 62 liegen die analogen Stromwerte 58 und 60 mit umgekehrter Polarität an. Als Ausgangswerte erzeugen die Operationsverstärker 62, 64 Spannungssignale 66, 68, die an einem zweiten Paar von Operationsverstärkern 70, 72 anliegen. Zusätzlich liegt an dem zweiten Paar von Operationsverstärkern 70, 72 eine Referenzspannung 74 an. Über die Operationsverstärker 70, 72 wird verglichen, ob die Differenzsignale größer oder kleiner als die vorgegebene Referenzspannung 74 sind. Die Ausgangssignale liegen als binäre Signale mit einer normierten Spannung an dem Sicherheitsschaltgerät 45, 45' an. Die nachfolgenden Relais wird entsprechend geschaltet. Die zu Fig. 2 beschriebene Struktur der Operationsverstärker wiederholt sich im oberen Ast des Differenzstromgrenzwertschalters 48.

Die Sicherheitsschaltgeräte 44, 45, 45' sind nach einem zweikanaligen Auslösevorgang automatisch wieder zurücksetzbar. Lediglich wenn eine einkanalige Auslösung eines der Sicherheitsschaltgeräte 44, 45, 45' erfolgte, muss ein manuelles Aktivieren des nicht ausgelösten Signalpfades erfolgen. Infolge dessen setzt sich das Sicherheitsschaltgerät automatisch zurück.

Durch die erfindungsgemäße Schlupfüberwachung können Nachteile einer frequenzbasierten Schlupfüberwachung vermieden werden. Hinzu kommt, dass bestehende Windenergieanlagen nachgerüstet werden können. Zudem setzt die Schlupfüberwachung auf physikalischen Größen auf, die ständig und schnell gemessen werden. Bei der erfindungsgemäßen Messung wird auf die gemessenen Drehzahlen von Rotorwelle und Generatorwelle aufgesetzt, wobei diese über baulich voneinander getrennte Auswertegeräte 40, 42 in analoge Stromwerte umgewandelt werden. Das Verfahren kann einkanalig, ist aber vorzugsweise zweikanalig in der Windenergieanlage auszuführen.

Das Nachrüsten an bestehenden Windenergieanlagen wird besonders dadurch erleichtert, dass auf bereits vorhandene Sensorsysteme auf Basis von digitalen Impulsgebern und mechanisch robuste Sensorscheiben zurückgegriffen werden kann. In den Frequenz-Stromumsetzern werden analoge Signale, vorzugsweise Einheitssignale im Bereich von 4 mA bis 20 mA, erzeugt. Die Frequenz-Stromumsetzer müssen lediglich für die Schlupfüberwachung parametriert werden (Normierung der Ausgangssignale unter Beachtung des Getriebeübersetzungsfaktors), damit die Stromäquivalente der gemessenen Drehzahl der Rotorwelle und Generatorwelle jederzeit identisch und einfach miteinander vergleichbar sind. Die Sicherheitsschaltgeräte 44, 45, 45' überwachen jeweils zwei Kanäle, wobei eine Sicherheitskette 46 dann ausgelöst wird, wenn jeweils einer der beiden Kanäle innerhalb einer definierten Toleranzzeit anspricht.

### Bezugszeichenliste

- 10: Rotor
- 12: Rotorblätter
- 14: Rotornabe
- 16: Rotorwelle
- 18: Sensorscheibe
- 20: Abtasteinheit
- 22: Getriebe
- 24: Kupplung
- 26: Generatorwelle
- 28: Sensorscheibe
- 30: Abtasteinheit
- 32: Generator
- 34: elektrische Leistung
- 36: Drehzahlerfassungseinheit
- 37: binäres Drehzahlsignal
- 38: Drehzahlerfassungseinheit
- 39: binäres Drehzahlsignal
- 40: Auswerteeinheit
- 41: Überwachungseinheit
- 42: Auswerteeinheit
- 44: Sicherheitsschaltgerät
- 45: Sicherheitsschaltgerät
- 45': Sicherheitsschaltgerät
- 46: Sicherheitskette
- 48: Differenzstromgrenzwertschalter
- 50: Differenzstromgrenzwertschalter
- 51: Auswerteeinrichtung
- 52: Betriebssteuerung
- 54: Ausgangssignal
- 54': Ausgangssignal
- 56: Ausgangssignal
- 56': Ausgangssignal
- 58: Analogstromwert zur Drehzahl der Generatorwelle
- 60: Analogstromwert zur Drehzahl der Generatorwelle
- 62: Operationsverstärker
- 64: Operationsverstärker
- 66: Spannungssignal
- 68: Spannungssignal
- 70: Operationsverstärker
- 72: Operationsverstärker
- 74: Referenzspannung

## Patentansprüche

1. Vorrichtung zur Überwachung eines an einem Triebstrang einer Windenergieanlage auftretenden Schlupfes zwischen einer von einem Rotor (10) angetriebenen Rotorwelle (16) und einer einen Generator antreibenden Generatorwelle (26), die über eine Kupplung (24) mit der Rotorwelle (16) verbunden ist, wobei eine erste Drehzahlerfassungseinheit (36) auf der Rotorwelle (16) und eine zweite Drehzahlerfassungseinheit (38) auf der Generatorwelle (26) jeweils einen eine Drehzahl der entsprechenden Welle anzeigenden Analogwert generiert, und eine Auswerteeinrichtung (51) zur Schlupfüberwachung die Analogwerte auswertet.

2. Vorrichtung nach Anspruch 1, **dadurch gekennzeichnet, dass** die Auswerteeinrichtung (51) einen Schwellwertvergleich dahingehend ausführt, ob die Analogwerte um mehr als einen vorbestimmten Schwellwert voneinander abweichen.

3. Vorrichtung nach Anspruch 2, **dadurch gekennzeichnet, dass** an der Auswerteeinrichtung (51) ein analoger Referenzwert für den Schwellwertvergleich anliegt.

4. Vorrichtung nach einem der Ansprüche 1 bis 3, **dadurch gekennzeichnet, dass** die Auswerteeinrichtung (51) mehrere Operationsverstärker aufweist, an denen die Analogwerte anliegen.

5. Vorrichtung nach einem der Ansprüche 1 bis 4, **dadurch gekennzeichnet, dass** die Auswerteeinrichtung (51) mindestens einen Kanal aufweist, der ein erstes Paar von Operationsverstärkern (62, 64) besitzt, die jeweils einen invertierenden und einen nicht invertierten Eingang besitzen, wobei ein erster Analogwert an einem ersten Operationsverstärker an dessen invertierendem Eingang und an einem zweiten Operationsverstärker an dessen nicht invertierendem Eingang und ein zweiter Analogwert an dem zweiten Operationsverstärker an dessen invertierendem Eingang und an dem ersten Operationsverstärker an dessen nicht invertierendem Eingang anliegt.

6. Vorrichtung nach Anspruch 5, **dadurch gekennzeichnet, dass** die Analogwerte Stromwerte sind.

7. Vorrichtung nach Anspruch 5 oder 6, **dadurch gekennzeichnet, dass** die Ausgangswerte der Operationsverstärker Spannungswerte sind.

8. Vorrichtung nach Anspruch 7, **dadurch gekennzeichnet, dass** in dem mindestens einen Kanal mit dem ersten Paar von Operationsverstärkern (62, 64) ein zweites Paar von Operationsverstärkern (70, 72) vorgesehen ist, die jeweils einen invertierenden Eingang und einen nicht invertierenden Eingang besitzen.

9. Vorrichtung nach Anspruch 8, **dadurch gekennzeichnet, dass** der analoge Referenzwert (74) als Spannungswert an dem zweiten Paar von Operationsverstärkern (70, 72) jeweils an einem Eingang anliegt, wobei einer der Eingänge ein invertierender Eingang und der andere der Eingänge ein nicht invertierender Eingang ist.

10. Vorrichtung nach einem der Ansprüche 1 bis 9, **dadurch gekennzeichnet, dass** die Auswerteeinrichtung (51) zweikanalig aufgebaut ist.

11. Vorrichtung nach einem der Ansprüche 1 bis 10, **dadurch gekennzeichnet, dass** die Auswerteeinrichtung (51) einen Abschaltbefehl für die Windenergieanlage auslösen kann.

12. Vorrichtung nach einem der Ansprüche 1 bis 11, **dadurch gekennzeichnet, dass** jede Drehzahlerfassungseinheit eine Abtasteinrichtung und einen Impulsgeber aufweist, der ein frequenzabhängiges Drehzahlsignal erzeugt, das über einen Umsetzer in ein analoges Signal umgesetzt wird.
